# FASCICULE DE BREVET EUROPEEN

(11) **EP 1 226 584 B1**
(45) Date de publication et mention de la délivrance du brevet: **04.06.2003**
(21) Numéro de dépôt: 00966195.0
(22) Date de dépôt: 18.09.2000
(51) Int. Cl.: G11B 33/04

(54) **BOITE POUR DISQUE COMPACT**
BEHÄLTER FÜR CD-PLATTE
COMPACT DISC CASE

(30) Priorité: 17.09.1999 FR 9911644; 27.06.2000 FR 0008220
(43) Date de publication de la demande: 31.07.2002
(73) Titulaire: Itey, Frédéric, F-91130 Ris-Orangis (FR)
(72) Inventeur: Itey, Frédéric, F-91130 Ris-Orangis (FR)
(74) Mandataire: Cabinet HERRBURGER
(86) Numéro de dépôt international: FR0002586
(87) Numéro de publication internationale: WO01022420

(56) Documents cités:
- EP-A- 0 811 976
- US-A- 4 592 600
- US-A- 5 628 399
- US-A- 5 704 474

## Description

La présente invention concerne une boîte à disque CD.

La difficulté de l'utilisation des disques CD est celle de la gestion des disques. Il arrive souvent surtout dans le cas de disques CD ROM utilisés en informatique, que plusieurs disques sont utilisés successivement et en alternance, si bien que très rapidement le désordre peut s'installer dans une série de disques.

On connaît déjà la boîte à CD comportant un témoin (US-A-5 628 399). Mais sa réalisation très complexe à cause de la mise en place du témoin avec interposition du ressort rend le coût prohibitif.

La présente invention a pour but de développer un moyen simple permettant de déceler de l'extérieur la présence ou l'absence d'un disque CD dans un boîtier même lorsque les boîtiers sont empilés ou rangés verticalement.

A cet effet, l'invention concerne une boîte à disque CD du type défini ci-dessus, caractérisée par le coulisseau portant une languette
- en forme de dièdre très ouvert dont
   * le premier volet est relié par une première charnière à la première partie du coulisseau, suivant un angle α naturel non nul
   * le deuxième volet déborde naturellement de la cavité de la boîte pour être sur le trajet de fermeture du couvercle et en l'absence de disque coopérer avec la face intérieure du couvercle pour être poussé vers l'intérieur de la cavité et tirer le coulisseau en position escamotée,
- ou être soumis à l'action du disque mis en place dans le logement, se plaquer contre la partie inclinée du bord relevé et repousser le coulisseau dans sa position indicatrice.

Cette forme de témoin mécanique est très simple à réaliser puisqu'il suffit d'une fenêtre dans le bord large du double fond et une ouverture dans le bord du logement à disque du double fond pour permettre le passage du coulisseau formant le témoin.

Cette boîte avec son coulisseau à languette permet de supprimer tout moyen de rappel du coulisseau et celui-ci se trouvera avec certitude dans la position escamotée en l'absence de disque à l'intérieur de la boîte. Le coulisseau avec sa languette est de préférence réalisé en une seule pièce en matière plastique et la charnière est elle-même réalisée par un film de matière plastique. Suivant l'élasticité ou la rigidité voulue pour l'articulation de la charnière, on réalise le film constituant celle-ci, plus ou moins épais. La liaison entre le premier et le second volet est relativement rigide pour bien conserver la forme de dièdre très ouvert à la languette ; celle-ci constitue ainsi une pièce relativement rigide permettant de pousser le coulisseau dans sa position escamotée avec la surface intérieure et éventuellement le bord intérieur du couvercle au moment de la fermeture de celui-ci. L'angle du dièdre correspond sensiblement à l'inclinaison de la partie inclinée du bord relevé.

L'autre articulation ou charnière reliant la languette à la première partie du coulisseau est relativement souple. Cette articulation correspond à un angle plus ou moins ouvert naturellement, c'est-à-dire que sa forme vient de sa fabrication et qu'elle tend naturellement à reprendre cet angle.

De façon intéressante, l'ouverture du bord du logement du disque se prolonge par une découpe ou un évidemment dans la base du double fond pour constituer un moyen de guidage du coulisseau.

Le coulisseau s'introduit facilement et rapidement dans l'intervalle entre le fond et le double fond, soit à travers la fenêtre, soit à travers l'ouverture, ce qui permet de réaliser et d'assembler la boîte de manière habituelle puis de mettre en place le coulisseau. Cela laisse également à l'utilisateur le choix de coulisseaux de couleurs différentes pour permettre un codage rapide des boîtes, d'autant plus intéressant que le coulisseau apparaît sur la tranche de la boîte rangée.

La surface apparente de la deuxième partie du coulisseau est une surface de préférence revêtue d'une matière ou d'une couleur contrastée par rapport à la couleur de la boîte. Il peut s'agir notamment d'une couleur fluorescente. Cette couleur apparaîtra même sur la tranche de la boîte puisque le bord large recouvre le bord du fond de la boîte. A ce niveau, qu'il s'agisse d'une partie transparente ou d'une absence de matière, la fenêtre permettra de voir, soit directement, soit par réfraction, la deuxième partie du témoin ou du coulisseau apparaissant dans la fenêtre et traduisant la présence d'un disque dans la boîte.

Suivant une autre caractéristique avantageuse, le témoin en forme de coulisseau est obtenu par extrusion d'un profilé qui est ensuite coupé en tranches donnant des coulisseaux. Cela facilite considérablement la fabrication des témoins en évitant d'avoir à réaliser des moules extrêmement compliqués pour des petites pièces de faibles dimensions.

Ce procédé de fabrication permet également de stocker plus facilement les coulisseaux ou de les préparer à l'avance puis de les munir d'une impression ou d'un élément personnalisé tel qu'une couleur appliquée par revêtement.

L'extrusion de profilé permet aussi de choisir des matières différentes d'un profilé à l'autre en fonction des applications du coulisseau ou pour teinter le profilé dans la masse.

Suivant une autre caractéristique avantageuse, le profilé est extrudé avec des matières à caractéristiques mécaniques différentes au moins dans la zone de l'articulation ; celle-ci est extrudée dans une matière élastique alors que les autres parties sont extrudées en une ou plusieurs matières rigides dont on peut modifier localement les teintes.

La surface indicatrice réalisée sur le témoin peut recevoir des inscriptions et des impressions. Il est également possible de coder cette surface ou d'y réaliser des impressions en relief ou en creux pour personnaliser le produit. Ce moyen d'impression difficile à falsifier puisqu'il ne s'agit pas d'une impression faite au laser, compliquera la contrefaçon en petites séries. En d'autres termes, une boîte de CD munie d'origine d'un témoin pourra être immédiatement authentifiée ainsi par le simple contrôle du témoin.

La surface indicatrice est, de préférence, inclinée pour passer sous le rebord de la boîte et être bien retenue à l'intérieur de la boîte.

La surface indicatrice constitue un moyen de repérage et de classement simple des boîtes puisque, par un codage en couleur des témoins, on pourra classer les boîtes sans avoir à examiner l'étiquette, ce qui nécessiterait l'examen des boîtes une à une.

Au contraire, grâce à la fenêtre et à la surface indicatrice apparaissant dans la fenêtre, il suffit de décaler légèrement les boîtes les unes par rapport aux autres pour rendre la fenêtre visible et vérifier le classement ou trouver les erreurs de classement.

Un tel classement peut également être intéressant dans les bacs de vente puisque les disques sont en général présentés en position non pas verticale mais légèrement inclinée, aussi la fenêtre et le témoin sont-ils apparents d'un disque à l'autre.

La présente invention sera décrite ci-après de manière plus détaillée à l'aide des dessins annexés dans lesquels :
- la figure 1 est une vue d'une boîte à disque CD ouverte, avec un disque,
- la figure 2 est une vue analogue à celle de la figure 1 de la boîte ouverte mais sans disque,
- la figure 3 est une vue en coupe partielle analogue aux précédentes montrant une boîte avant la mise en place du témoin,
- la figure 4A est une vue analogue à celle de la figure 3 d'une boîte avec un témoin, au moment de la mise en place d'un disque, le témoin occupant une certaine position initiale,
- la figure 4B correspond à la figure 4A mais pour le témoin dans une position initiale différente,
- la figure 4C est une vue en coupe analogue à la figure 4A montrant une variante de réalisation du coulisseau,
- la figure 5 est une vue en perspective d'un profilé dans lequel sont coupés des coulisseaux selon le mode de réalisation de la figure 4B,
- la figure 6A est une vue d'une boîte, le disque étant mis en place et le couvercle en cours de fermeture,
- la figure 6B correspond à la boîte de la figure 6A lorsque le couvercle est fermé,
- la figure 7A est une vue analogue à celle de la figure 6A au moment de la fermeture d'une boîte sans disque,
- la figure 7B est une vue de la boîte de la figure 7A après fermeture du couvercle,
- la figure 8A montre la boîte sans disque dans la position représentée à la figure 7A, au moment de la fermeture du couvercle,
- la figure 8B montre la variante de la figure 7A, le couvercle étant fermé.

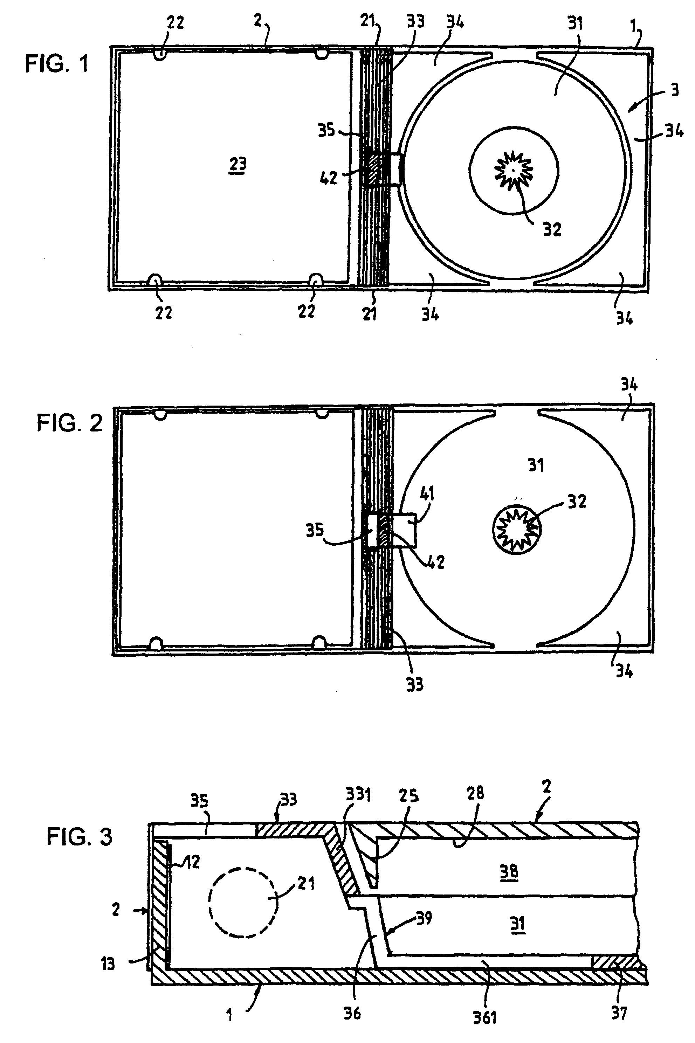

Selon les figures 1, 2, 3, l'invention concerne une boîte à disque CD destinée de façon générale à des disques audio ou vidéo, ou CD ROM pour l'informatique.

Cette boîte se compose de façon connue, d'un fond 1 auquel est accroché un couvercle 2, et d'un double fond 3 logeant le disque.

Le couvercle 2 est relié au fond 1 par une articulation constituée par des pivots situés sur le prolongement des pattes 21 venant dans un logement respectif réalisé dans les parois latérales correspondantes du fond 1.

Le fond 1 et le couvercle 2 sont en matière plastique transparente. Le couvercle 2 comporte des pattes 22 pour tenir une brochure 23 ou une étiquette. Le fond 1 reçoit une étiquette de fond 12 qui remonte également le long du bord 13 pour apparaître sur la tranche de la boîte (voir figure 3).

Le fond 1 constitue une partie de l'enveloppe extérieure du disque logé dans le double fond 3.

Le double fond 3 est en matière plastique moulée, composé d'un logement 31 ayant la forme d'un disque CD et dont la profondeur correspond à l'épaisseur d'un disque. Au centre du logement, il y a une rondelle de fixation 32 avec des languettes sur laquelle on accroche le disque CD pour le tenir dans le logement. Le logement 31 est entouré par une plage relevée formant quatre secteurs triangulaires curvilignes 34. Le double fond 3 est muni d'un bord large 33, relevé du côté de l'articulation du couvercle 2 et coiffant le bord 13 du fond 1.

Le double fond 3 est imbriqué dans le fond 1 par une liaison mécanique et lorsque la boîte est fermée, le bord large 33 apparaît dans l'intervalle des pattes 21 du couvercle 2 qui ne couvre pratiquement que la surface carrée du double fond, occupée par le logement 31 et les coins 34.

Habituellement, le fond 1 et le couvercle 2 sont en une matière plastique transparente pour laisser voir les étiquettes alors que le double fond 3 est en une matière plastique foncée, opaque. Le bord large 33 apparaît comme une bande foncée sur la face supérieure de la boîte lorsque le couvercle 2 est fermé.

Selon l'invention, cette boîte comporte une fenêtre 35 réalisée dans le bord large 33 du double fond 3. Ici la fenêtre 35 n'occupe que la moitié de la largeur du bord 33 ; dans une variante, la fenêtre occupe toute la largeur. Le côté du logement 31 comporte un passage 36 qui, selon un mode de réalisation avantageux, est situé dans le prolongement radial de la fenêtre 35 par rapport au centre du logement 3 (ou centre de l'emplacement du disque), de façon symétrique par rapport au plan médian PP.

La fenêtre 35 peut être prédécoupée partiellement au moulage pour être enlevée ensuite pour mettre en place un témoin en forme de coulisseau. Cette fenêtre peut également rester sur les boîtes qui ne reçoivent pas de témoin 4.

Un témoin de présence 4 vient en saillie dans le logement 31 du disque pour être actionné par celui-ci lorsqu'il est mis en place, de sorte que le témoin apparaît dans la fenêtre 35 du bord large 33.

La figure 1 montre le coulisseau 4 en position d'affichage, poussé par le disque 5 s'appuyant contre la partie 41. La partie 42 représentée par des hachures apparaît alors dans la fenêtre 35 du bord large 33. La figure 2 montre la même boîte ouverte sans disque. Dans ce cas, le témoin est rappelé dans sa position escamotée. Sa partie 41 vient nettement en saillie à l'intérieur du logement 31 alors que sa partie d'affichage 42 est escamotée derrière le bord large 33 et n'est pas visible.

Aux figures 1 et 2, les boîtes sont représentées ouvertes pour montrer à la fois le témoin et le disque ou l'absence de disque. En fait, l'aspect que l'on a du témoin, par rapport au bord large 33 du double fond, est le même que le couvercle 2 soit fermé ou ouvert puisque le bord large 33 apparaît toujours entre les pattes du couvercle 2.

Selon la figure 3, une boîte à disque CD de l'invention se compose du fond 1 recevant le double fond 3 et le couvercle 2 qui pivote par rapport au fond 1 autour des pivots 21. Le fond 1 et son côté 13 sont occupés par une étiquette 12. Le logement 31 est surmonté d'une cavité 38 coiffée par le couvercle 2. Le double fond 3 se compose d'une base 37 et d'un bord formant le logement 31 et au-dessus du logement 31, d'un bord relevé 33 avec une fenêtre 35. La partie inclinée 331 du bord relevé 33 est en regard du bord intérieur 25 du couvercle 2 lorsque celui-ci est fermé. Il subsiste un jeu entre la partie inclinée 331 et le bord intérieur 25 du couvercle 2.

Le double fond 3 comporte une découpe 36 dans le bord latéral 39 du côté du bord relevé 33, qui se poursuit par une découpe 361 dans la base 37. En variante, on peut avoir seulement un évidemment (non représenté) servant, comme la découpe, au guidage du coulisseau. Les découpes 36, 361 (ou évidements) et la fenêtre 35 sont de préférence alignées radialement par rapport au centre du logement 31.

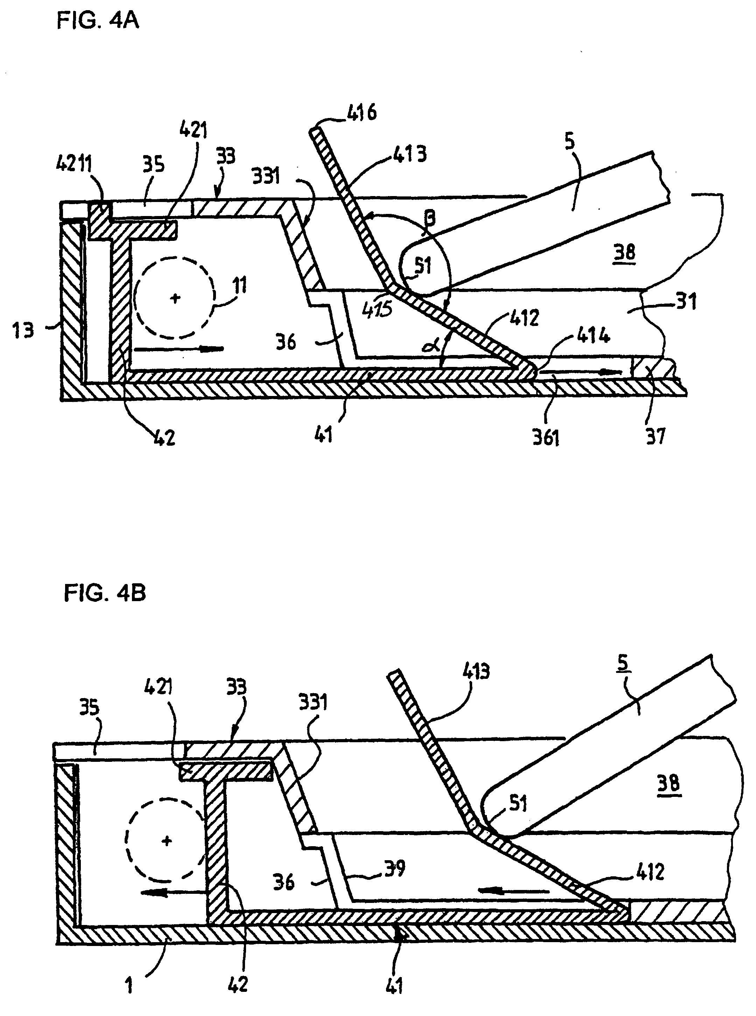

La boîte de la figure 3 est complétée par un coulisseau 4 (figure 4A) composé d'une première partie 41 et d'une seconde partie 42. La partie 41 vient en saillie dans le logement 31 et la partie 42 d'affichage vient au niveau de la fenêtre 35 ou sous le bord relevé 33 pour faire apparaître la surface indicatrice 421 ou l'escamoter suivant l'indication à afficher (disque en place ou disque absent).

Selon une variante très intéressante représentée seulement à la figure 4A, la surface indicatrice est prolongée vers le haut par une partie 4211 qui pénètre dans l'ouverture de la fenêtre 35 pour apparaître surtout sur la tranche de la boîte, lorsque le coulisseau occupe la position de la figure 4A. Cette partie 4211 est suffisamment mince au niveau de la fenêtre 35 pour ne pas être perceptible dans la fenêtre lorsque le coulisseau est en position escamotée, pour ne pas risquer de donner une fausse information de présence d'un disque dans la boîte.

Le coulisseau 4 porte une languette en forme de dièdre très ouvert, relativement rigide. L'angle du dièdre est sensiblement plus grand que l'angle de la partie inclinée 331 et de la base 37. Cette languette se compose d'un premier volet 412 et d'un second volet 413. Le premier volet 412 est relié par une arête 414 à l'extrémité de la première partie 41 du coulisseau 4 et le deuxième volet 413 est relié au premier volet 412 par une articulation 415. Le deuxième volet 413 se termine par un bord 416.

Dans la position naturelle, en l'absence de contraintes externes, le coulisseau et sa languette occupent la disposition représentée à la figure 4A. Le premier volet 412 fait un angle α non nul avec la première partie 41, ce qui correspond à l'état naturel de son articulation 414 et dans les mêmes conditions le second volet 413 fait un angle β avec le premier volet 412. L'arête 415 est rigide si bien que l'angle β ne se déforme pratiquement pas sous l'effet d'efforts externes.

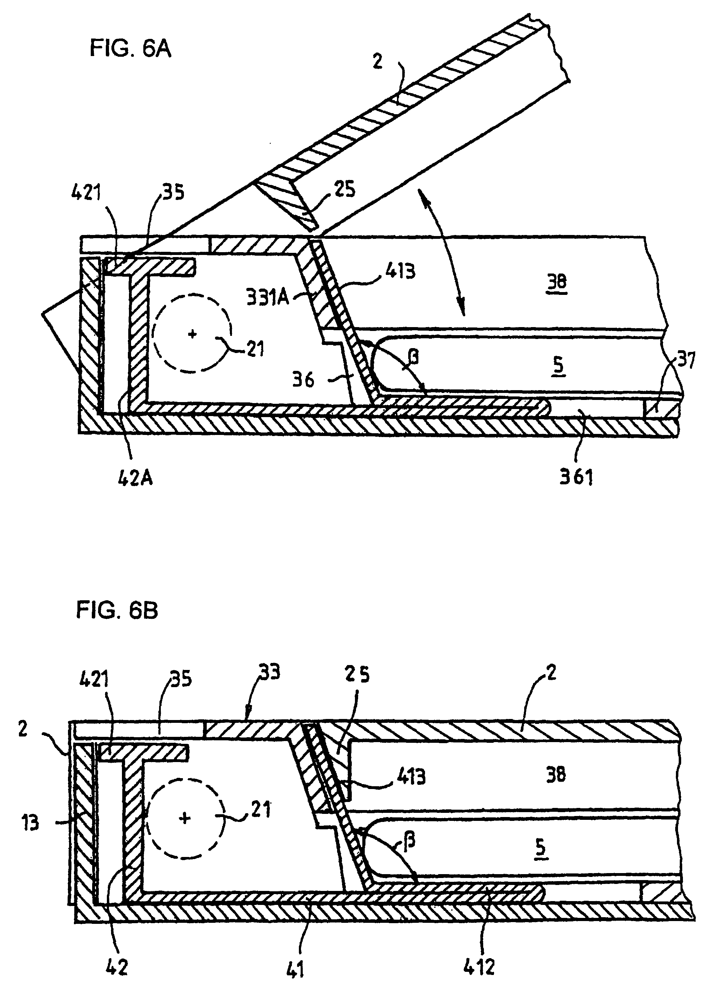

La figure 4A montre un disque 5 incliné que l'on appuie par son bord 51 contre le ou les volets 412, 413 pour le placer dans son logement 31. Par ce mouvement naturel d'introduction du disque 5, d'abord en position inclinée, puis en s'aplatissant contre la base 37 et le plot central, le disque écrase et repousse les volets 412, 413 pour les conduire dans la position représentée à la figure 6A. Ce mouvement d'introduction du disque 5 selon la figure 4A se traduit simplement par le repliement du volet 412, à plat contre la première partie 41 du coulisseau 4 et la venue du volet 413 contre la partie inclinée 331 du bord relevé 33. Au cours de ce mouvement, comme la seconde partie 42 du coulisseau 4 est déjà en butée contre la paroi 13 du fond 1, il n'y a pas mouvement de translation du coulisseau. Il s'agit d'une position initiale du coulisseau 4 prise par hypothèse, en supposant le cas extrême du coulisseau 4 qui serait déjà en position d'affichage après l'ouverture du couvercle ; cette position peut résulter d'un simple glissement du coulisseau sous l'effet du mouvement d'ouverture du couvercle.

Après cette mise en place, on peut refermer le couvercle 2 dont le bord intérieur 25 vient par-dessus le deuxième volet 413.

Au moment de la mise en place du disque 5 dans la boîte, le coulisseau peut également occuper une position avancée comme celle représentée à la figure 4B. Cette position initiale du coulisseau 4 est plus naturelle si la boîte était vide avant l'ouverture du couvercle. Dans ce cas, le mouvement d'introduction du disque 5 se traduit par l'appui de son bord 5 contre les volets 412 et/ou 413 qui subissent un mouvement combiné déformant élastiquement l'articulation 414 entre le volet 412 et la première partie 41 pour que le volet 412 se mette à plat ; ce mouvement est associé au pivotement forcé du volet 413 et le mouvement de translation du coulisseau ; cela conduit le coulisseau 4 et en particulier la seconde partie 42 et son élément indicateur 421, de la position de la figure 4B à la position de la figure 6A. A ce moment, la boîte peut se refermer pour arriver dans la position fermée représentée à la figure 6B.

Lorsqu'un disque 5 est dans la boîte, la fermeture du couvercle 2 se traduit par le verrouillage du coulisseau dans la position indicatrice puisque le volet 413 est pincé entre la partie inclinée 331 et le bord intérieur 25 du couvercle. Cela évite que sous l'effet de vibrations ou de chocs l'élasticité de la languette ne risque de soulever le premier volet 412 et ainsi le disque 5.

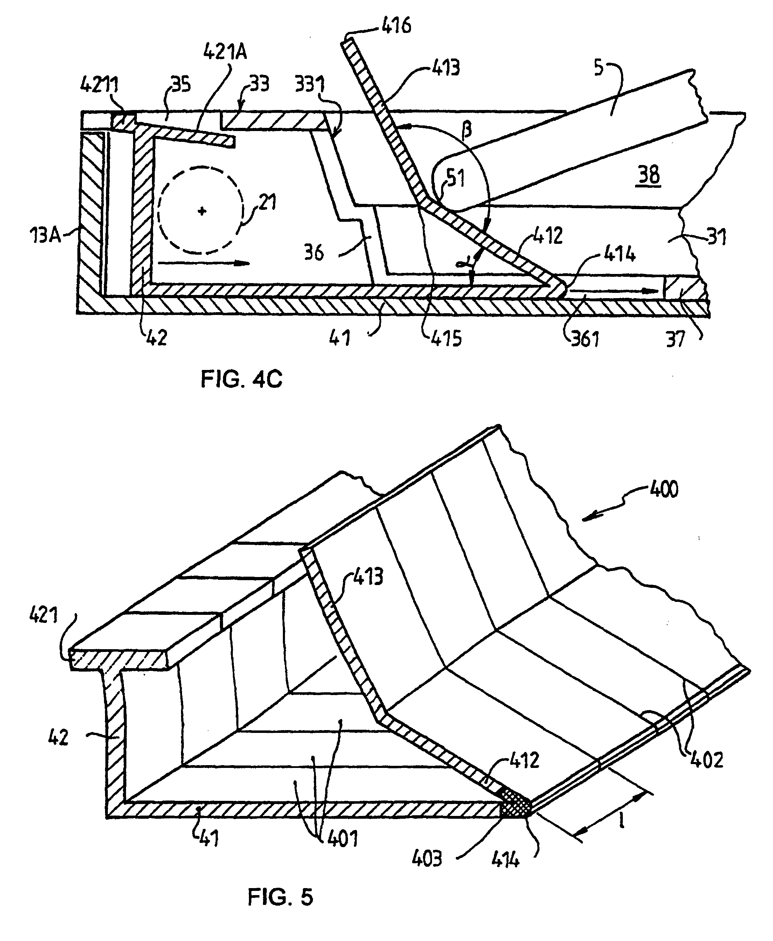

La figure 4C montre une variante de réalisation d'une boîte. Dans cette variante, la surface indicatrice 421A est inclinée pour passer sous le bord 33 et apparaître dans la fenêtre 35. La surface indicatrice 421A est également très inclinée, pour venir par-dessus le bord supérieur du côté 13A lorsque le coulisseau est complètement reculé vers la gauche.

La figure 5 montre un mode de réalisation particulièrement avantageux des coulisseaux, selon lequel on fabrique un profilé 400 ayant la section d'un coulisseau en position non comprimée. Puis on coupe des tranches du profilé, de longueur (1), correspondant à la largeur d'un coulisseau 401, suivant une ligne de coupe 402.

Ce procédé de fabrication est très intéressant car il permet non seulement de simplifier la fabrication des coulisseaux 401 mais également de les réaliser avec des parties en des matières ayant des caractéristiques, notamment mécaniques, différentes. Ainsi la partie 403 au niveau de l'articulation 414 est dans une matière souple et élastique alors que les autres parties telles que 41, 42, 421 ou 412, 413 sont en une matière rigide.

Bien que le mode de réalisation du profilé de la figure 5 corresponde à la section du coulisseau de la figure 4B, tout autre forme de coulisseau peut être réalisée de cette manière et en particulier le coulisseau des figures 4A et 4C.

On peut également diversifier les matières utilisées pour la fabrication du profilé 400 et, par exemple, donner à la surface indicatrice 421, une couleur différente de celle des autres parties.

Même si le profilé 400 n'est pas teinté dans la masse, il est possible de lui donner une teinte à la demande, et d'imprimer par exemple sur les surfaces indicatrices 421, des logos, marques ou autres, qui seront particulièrement perceptibles, sur des fonds de teinte fluorescente ou très tranchée.

Le fait que la surface indicatrice 421 soit très visible est d'un intérêt très grand pour le classement des boîtes puisqu'il suffit d'incliner celles-ci ou de décaler une pile de boîtes de la largeur correspondant sensiblement à la fenêtre 35 pour laisser apparaître la surface indicatrice 421 des différentes boîtes de la pile.

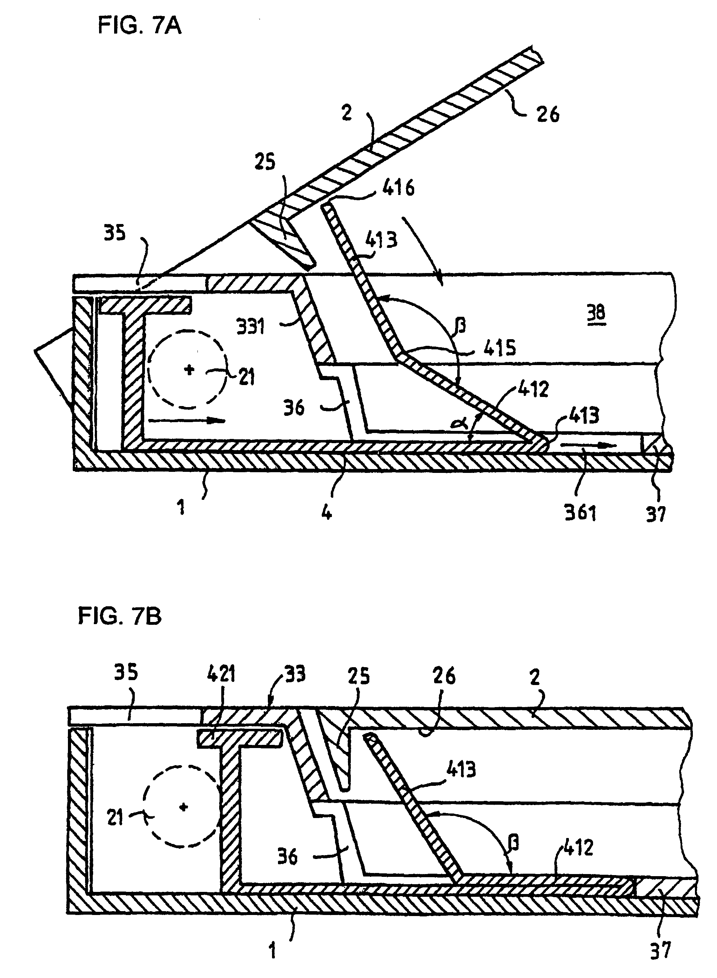

Les figures 7A et 7B montrent la fermeture d'une boîte en l'absence de disque.

Selon la figure 7A, la languette du coulisseau 4 occupe naturellement la position de détente représentée : le premier volet 412 est relevé suivant son angle naturel α et le second volet 413 fait avec le premier volet 412 l'angle β. Dans ces conditions, une partie du volet 413 dépasse du bord de la cavité 38 normalement couverte par le couvercle.

Le couvercle 2 est représenté en cours de fermeture. Le bord 416 du deuxième volet est placé sur la trajectoire du volet 2 et rencontre ainsi la surface intérieure 26 du couvercle 2. Le mouvement de pivotement du volet 2 se poursuit. Le bord 416 est alors poussé par la surface intérieure 26 jusqu'à ce qu'éventuellement le bord 416 rencontre le bord intérieur 25 du couvercle 2. Les volets 413, 412 sont poussés en refermant l'angle naturel α et en plaquant le premier volet 412 contre la première partie 41 du coulisseau, (figure 7B) ; ce mouvement s'accompagne d'un mouvement de translation du coulisseau dans le sens indiqué par les flèches à la figure 7A. En fin de mouvement de fermeture du couvercle 2, le coulisseau 4 occupe la position représentée à la figure 7B.

Dans cette position, le coulisseau 4 est bloqué par le verrouillage réalisé entre la face intérieure 26 ou éventuellement le bord intérieur 25 du couvercle 2 et le bord 416 du deuxième volet 413, ce qui interdit au coulisseau de se déplacer en sens inverse. La deuxième partie 42 du coulisseau et notamment la surface d'affichage 421 sont tenues en position escamotée sous le bord relevé 33, au-delà de la fenêtre 35.

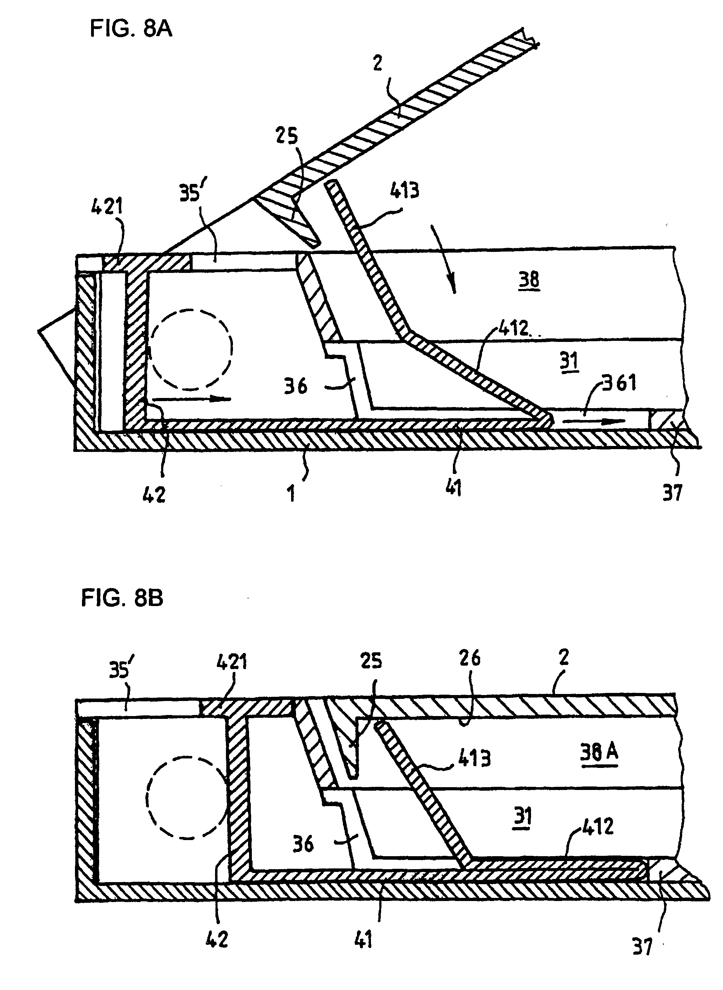

La variante des figures 8A et 8B concerne simplement la taille de la fenêtre 35' dans le bord relevé 33. La fenêtre s'étend sur toute la largeur du bord relevé et la surface indicatrice 421 de la deuxième partie 42 du coulisseau est visible dans la position escamotée et dans la position indicatrice. La seule différence est que dans l'une des positions elle se trouve d'un côté de l'ouverture de la fenêtre et dans l'autre à l'autre extrémité de la fenêtre.

Cette variante de réalisation correspond à un choix de fabrication qui, dans certains cas, peut être plus simple que celui d'une fenêtre n'occupant qu'une partie de la largeur du bord relevé du double fond.

## Revendications

1. Boîte à disque CD comprenant :
- un fond (1),
- un couvercle (2) relié au fond (1) par une articulation (21) formée par le prolongement de deux côtés du couvercle constituant chaque fois une patte munie d'un pivot et reliée extérieurement par les pivots aux orifices d'articulation du fond,
- un double fond (3) comprenant
* un logement (31) pour le disque (5), entouré par une plage relevée (34),
* un bord large (33) relevé du côté de l'articulation du couvercle (2),
- ce double fond (3) étant imbriqué dans le fond (1) et le bord large (33) apparaissant dans l'intervalle entre les pattes (21) du couvercle (2), sensiblement au niveau du couvercle fermé,
- une fenêtre (35) dans la surface supérieure du bord large (33),
- un témoin (4) en forme de coulisseau
* venant dans le logement (31) du disque (5),
* pour être actionné par le disque (5) mis en place dans son logement et apparaître dans la fenêtre (35) pour signaler la présence du disque dans la boîte.
**caractérisée en ce que**
le coulisseau (4) porte une languette (412, 413)
- en forme de dièdre très ouvert dont
* le premier volet (412) est relié par une première charnière (414) à la première partie (41) du coulisseau (4),
suivant un angle (α) naturel non nul
* le deuxième volet (413) déborde naturellement de la cavité (38) de la boîte pour être sur le trajet de fermeture du couvercle (2) et en l'absence de disque coopérer avec la surface intérieure (26) du couvercle (2) pour être poussé vers l'intérieur de la cavité (38) et tirer le coulisseau (4) en position escamotée,
- ou être soumis à l'action du disque (5) mis en place dans le logement (31), se plaquer contre la partie inclinée (331) du bord relevé (33) et repousser le coulisseau (4) dans sa position indicatrice.

2. Boîte à disque CD selon la revendication 1,
**caractérisée en ce que**
l'angle (β) du dièdre de la languette (412-413) correspond sensiblement à l'inclinaison de la partie inclinée (331) du bord relevé par rapport à la base (37) du double fond (3).

3. Boîte à disque CD selon la revendication 1,
**caractérisée en ce que**
l'ouverture (36) du bord du logement (31) se prolonge par une découpe ou un évidemment (361) dans la base (37) du double fond (3) pour constituer un moyen de guidage du coulisseau (41, 4).

4. Boîte à disque CD selon la revendication 1,
**caractérisée en ce que**
le coulisseau (4) et la languette (412, 413) sont réalisés en une seule pièce en matière plastique.

5. Boîte à disque CD selon la revendication 1,
**caractérisée en ce que**
le coulisseau (4) est obtenu par extrusion d'un profilé (400), coupé à la longueur l d'un coulisseau (4).

6. Boîte à disque CD selon la revendication 5,
**caractérisée en ce que**
le profilé (400) est extrudé avec des matières à caractéristiques mécaniques et/ou optiques différentes, au moins dans la zone (403) de l'articulation qui est en une matière élastique alors que les autres parties (41, 42, 421, 412, 413) sont en une matière rigide.

7. Boîte à disque CD selon la revendication 1,
**caractérisée en ce que**
l'ouverture (36) du double fond (3) est prédécoupée partiellement pour n'être enlevée que pour la mise en place d'un coulisseau.

8. Boîte à disque CD selon la revendication 1,
**caractérisée en ce que**
la surface apparente (421) formant la surface indicatrice de la deuxième partie (42) du coulisseau (4) est revêtue de couleur contrastée par rapport à la couleur de la boîte et notamment une couleur fluorescente.

9. Boîte à disque CD selon la revendication 1,
**caractérisée en ce que**
la fenêtre (35) dans le bord large (33) est située sensiblement au milieu de la longueur du bord large et l'ouverture dans le bord du logement à disque du double fond est située dans l'alignement de la fenêtre et du centre du logement à disque.

## Claims

1. A CD disc case comprising:
- a bottom (1),
- a lid (2) connected to the bottom (1) by an articulation (21) formed by the prolongation of two sides of the lid, each time constituting a lug provided with a pivot and connected externally by the pivots to the articulation apertures of the bottom,
- a false bottom (3) comprising
* a housing (31) for the disc (5), surrounded by a raised area (34),
* a broad edge (33) raised from the side of the articulation of the lid (2),
- the false bottom (3) being fitted into the bottom (1) and the broad edge (33) appearing in the gap between the lugs (21) of the lid (2), substantially at the level of the closed lid,
- a window (35) in the upper surface of the broad edge (33),
- an indicator (4) in the form of a slider
* coming into the housing (31) of the disc (5),
* to be actuated by the disc (5) placed in position in its housing and to appear in the window (35) to indicate the presence of the disc in the case,
**characterised in that**
the slider (4) carries a tongue (412, 413)
- in the shape of a very open dihedron in which
* the first wing (412) is connected by a first hinge (414) to the first portion (41) of the slider (4),
at a natural, non-zero angle (α)
* the second wing (413) projects naturally beyond the cavity (38) of the case to be on the path of closure of the lid (2) and, in the absence of a disc, to co-operate with the inner surface (26) of the lid (2) to be pushed towards the inside of the cavity (38) and to pull the slider (4) into the retracted position,
- or to be subjected to the action of the disc (5) placed in position in the housing (31), press itself against the inclined portion (331) of the raised edge (33) and push the slider (4) back into its indicating position.

2. A CD disc case according to claim 1,
**characterised in that**
the angle (β) of the dihedron of the tongue (412-413) corresponds substantially to the inclination of the inclined portion (331) of the raised edge relative to the base (37) of the false bottom (3).

3. A CD disc case according to claim 1,
**characterised in that**
the opening (36) of the edge of the housing (31) is extended by a cutaway portion or a recess (361) in the base (37) of the false bottom (3) to constitute a means for guiding the slider (41, 4).

4. A CD disc case according to claim 1,
**characterised in that**
the slider (4) and the tongue (412, 413) are produced in one piece from plastics material.

5. A CD disc case according to claim 1,
**characterised in that**
the slider (4) is obtained by extrusion of a profile section (400), cut to the length 1 of a slider (4).

6. A CD disc case according to claim 5,
**characterised in that**
the profile section (400) is extruded with materials having different mechanical and/or optical properties, at least in the region (403) of the articulation which is made of a resilient material while the other portions (41, 42, 421, 412, 413) are made of a rigid material.

7. A CD disc case according to claim 1,
**characterised in that**
the opening (36) of the false bottom (3) is partially pre-cut out to be removed only for the installation of a slider.

8. A CD disc case according to claim 1,
**characterised in that**
the visible surface (421) forming the indicating surface of the second portion (42) of the slider (4) is coated with a colour contrasting with the colour of the case and in particular a fluorescent colour.

9. A CD disc case according to claim 1,
**characterised in that**
the window (35) in the broad edge (33) is located substantially in the middle of the length of the broad edge and the opening in the edge of the disc housing of the false bottom is located in the alignment of the window and of the centre of the disc housing.

## Patentansprüche

1. Behälter für CD-Platte mit:
- einem Unterteil (1),
- einem Deckel (2), der mit dem Unterteil (1) durch ein durch die Verlängerung von zwei Seiten des Deckels gebildetes Gelenk (21) verbunden ist, wobei jede Verlängerung einen mit einem Gelenkzapfen versehenen Lappen bildet, die durch die Gelenkzapfen von außen mit den Gelenköffnungen des Unterteils verbunden sind,
- einem doppelten Boden (3) mit
* einer Aufnahme (31) für die Platte (5), umgeben von einem erhöhten Bereich (34),
* einem breiten Rand (33), der auf der Seite des Gelenks des Deckels (2) hochgezogen ist,
- wobei dieser doppelte Boden (3) im Unterteil (1) eingesetzt ist und der im Zwischenraum zwischen den Lappen (21) des Deckels (2) sichtbare breite Rand (33) sich annähernd auf dem Niveau des geschlossenen Deckels befindet,
- einem Fenster (35) in der Oberseite des breiten Randes (33),
- einer Kontrollanzeige (4) in Form eines Schiebers,
* der bis in die Aufnahme (31) der Platte (5) reicht,
* um durch die in ihre Aufnahme eingelegte Platte (5) betätigt und in dem Fenster (35) sichtbar zu werden, um anzuzeigen, dass sich eine Platte in dem Behälter befindet,
**dadurch gekennzeichnet,**
**dass** der Schieber (4) eine Zunge (412, 413) aufweist,
- in Form eines weit geöffneten V, von dem
* der erste Schenkel (412) durch ein erstes Scharnier (414) mit dem ersten Teil (41) des Schiebers (4) verbunden ist,
entsprechend einem herstellungsgemäß nicht Null betragenden Winkel (α)
* der zweite Schenkel (413) naturgemäß über die Vertiefung (38) des Behälters übersteht, um sich in der Schließbahn des Deckels (2) zu befinden und bei nicht vorhandener Platte mit der Innenseite (26) des Deckels (2) zusammenzuarbeiten, um ins Innere der Vertiefung (38) gedrückt zu werden und den Schieber (4) in seine zurückgezogene Stellung zu ziehen,
- oder um der Einwirkung der in die Aufnahme (31) eingelegten Platte (5) ausgesetzt zu sein und sich an den schrägen Teil (331) des hochgezogenen Randes (33) anzulegen und den Schieber (4) in seine Anzeigeposition zurückzuschieben.

2. Behälter für eine CD-Platte nach Anspruch 1, **dadurch gekennzeichnet, dass** der Winkel (β) der V-Form der Zunge (412-413) annähernd der Neigung des schrägen Teils (331) des hochgezogenen Randes in Bezug auf die Basis (37) des doppelten Bodens (3) entspricht.

3. Behälter für CD-Platte nach Anspruch 1, **dadurch gekennzeichnet, dass** die Öffnung (36) des Randes der Aufnahme (31) durch einen Ausschnitt oder eine Aussparung (361) in der Basis (37) des doppelten Bodens (3) verlängert ist, um ein Führungsmittel für den Schieber (41, 4) zu bilden.

4. Behälter für CD-Platte nach Anspruch 1, **dadurch gekennzeichnet, dass** der Schieber (4) und die Zunge (412, 413) ein einziges, aus Kunststoff hergestelltes Teil bilden.

5. Behälter für CD-Platte nach Anspruch 1, **dadurch gekennzeichnet, dass** der Schieber (4) durch Extrudieren eines Profils (400) hergestellt wird, das entsprechend der Länge 1 eines Schiebers (4) zerschnitten wird.

6. Behälter für CD-Platte nach Anspruch 5, **dadurch gekennzeichnet, dass** das Profil (400) aus Materialien mit unterschiedlichen mechanischen und/oder optischen Eigenschaften extrudiert wird, wenigstens im Bereich (403) des Gelenks, der aus einem elastischen Material besteht, während die anderen Teile (41, 42, 421, 412, 413) aus einem steifen Material bestehen.

7. Behälter für CD-Platte nach Anspruch 1, **dadurch gekennzeichnet, dass** die Öffnung (36) im doppelten Boden (3) teilweise vorgeschnitten ist, um sie nur zum Anordnen eines Schiebers durch Entfernen auszubilden.

8. Behälter für CD-Platte nach Anspruch 1, **dadurch gekennzeichnet, dass** die die Anzeigefläche des zweiten Teils (42) des Schiebers (4) bildende sichtbare Fläche (421) in Bezug auf die Farbe des Behälters mit einer Kontrastfarbe, insbesondere einer fluoreszierenden Farbe versehen- ist.

9. Behälter für CD-Platte nach Anspruch 1, **dadurch gekennzeichnet, dass** das Fenster (35) im breiten Rand (33) sich annähernd in der Mitte der Länge des breiten Randes befindet und die Öffnung im Rand der Platten-Aufnahme des doppelten Bodens mit dem Fenster und der Mitte der Platten-Aufnahme fluchtet.
